(19) Europäisches Patentamt
European Patent Office
Office européen des brevets

(11) **EP 2 929 209 B1**

(12) **EUROPÄISCHE PATENTSCHRIFT**

(45) Veröffentlichungstag und Bekanntmachung des Hinweises auf die Patenterteilung:
**07.10.2020 Patentblatt 2020/41**

(21) Anmeldenummer: **13811372.5**

(22) Anmeldetag: **30.10.2013**

(51) Int Cl.:
*F16F 1/366* *(2006.01)*    *F16F 1/44* *(2006.01)*
*F16F 9/04* *(2006.01)*

(86) Internationale Anmeldenummer:
**PCT/EP2013/003273**

(87) Internationale Veröffentlichungsnummer:
**WO 2014/086447 (12.06.2014 Gazette 2014/24)**

(54) **LAGER**

BEARING

SUPPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.12.2012 DE 102012023616**

(43) Veröffentlichungstag der Anmeldung:
**14.10.2015 Patentblatt 2015/42**

(73) Patentinhaber: **Trelleborg Antivibration Solutions Germany GmbH**
**16727 Velten (DE)**

(72) Erfinder: **CORDTS, Detlef**
**16348 Wandlitz (DE)**

(74) Vertreter: **Reiser & Partner**
**Patentanwälte mbB**
**Weinheimer Straße 102**
**69469 Weinheim (DE)**

(56) Entgegenhaltungen:
**EP-A2- 1 050 695**      **DE-C- 20 204**
**FR-A1- 2 073 162**      **US-A- 3 892 398**
**US-A- 4 006 892**       **US-A- 5 823 515**
**US-A1- 2002 105 123**

**Beschreibung**

Technisches Gebiet

Die Erfindung betrifft ein Lager nach dem Oberbegriff des Patentanspruchs 1.

Stand der Technik

Solche Lager sind aus den DE 20 204 C, FR 2 073 162 A1 und US 2002/0105123 A1 bekannt.

Aus dem Stand der Technik ist bereits bekannt, Endlosfasern in Form von Gelegen als Verstärkung in Elastomeren einzusetzen. Die Endlosfasern dienen beispielsweise als Festigkeitsträger in Keilriemen oder als Gewebe in Schläuchen, Reifen und Luftfederbälgen.

Aus dem Stand der Technik sind überdies Lager bekannt, die als Schichtfedern ausgestaltet sind. Diese Schichtfedern weisen Gummi-Metall-Konstruktionen auf. Die EP 2 360 388 A offenbart Schichtfedern der genannten Art.

Aus der Literatur "FASERVERSTÄRKTE ELASTOMERLAGER - Konzeption und Bemessung"; Ulrich Gerhaher; Wien, August 2010, sind Baulager bekannt.

Die bisher bekannten vielschichtigen Konstruktionen der Lager sind kostenintensiv, da eine Vielzahl von Blechen hergestellt werden muss. Des Weiteren sind die Lager kostenintensiv in der Verarbeitung, da ein Reinigen und Beschichten der Bleche erfolgen muss. Des Weiteren müssen die Bleche in Werkzeuge eingelegt werden.

Die Herstellung von solchen Lagern, die Bleche und Elastomerschichten aufweisen, ist prozesstechnisch nicht einfach zu beherrschen. Es kann zu einem Verbiegen der Bleche in den Werkzeugen beim Einspritzen des Elastomers kommen.

Insbesondere müssen relativ teure Werkzeuge zur Entformung der Lager geteilt sein. Des Weiteren müssen eventuell auch sogenannte Faltkerne zur Entformung einer mittigen Bohrung vorgesehen sein.

Die Belastung der Elastomere bei den bekannten Lagern kann sehr inhomogen sein. Es kann zu einer starken Konzentration der Dehnung am Aussenrand eines Elastomers kommen. Der Anstieg der Federkonstanten unter Last, nämlich die Progressivität eines Lagers, ist begrenzt durch die zulässigen Dehnungen im Elastomer. Die Dämpfung ist begrenzt durch die erreichbaren Verlustwinkel in den typischerweise verwendeten Elastomeren.

In der US4006892 wird ein Federelement aus einem Elastomerblock mit Fasern im äußeren Bereich des Elastomerblocks zur Verstärkung des Federelements offenbart.

In der EP 1 050 695 A2 wird ein Federelement aus einem Elastomerblock mit Fasern am Außenumfang zur Verstärkung des Federelements offenbart.

Darstellung der Erfindung

Der Erfindung liegt daher die Aufgabe zugrunde, ein Lager der eingangs genannten Art derart auszugestalten und weiter zu bilden, dass dieses nach kostengünstiger Fertigung eine lange Lebensdauer zeigt.

Die vorliegende Erfindung löst die zuvor genannte Aufgabe durch die Merkmale des Patentanspruchs 1.

Erfindungsgemäß ist zunächst erkannt worden, dass die bekannten Lager relativ teuer in der Fertigung sind. Darauf ist erkannt worden, dass eine Verformungsbehinderung der Elastomerschicht nicht konzentriert an einzelnen Stellen durch Bleche, sondern "verschmiert" durch Verstärkungsfäden an der gesamten Oberfläche erzeugt werden kann.

Die Verstärkungsfäden umfangen oder umgeben die Elastomerschicht.

Die Verformung der Elastomerschicht fällt wesentlich geringer aus, so dass keine lokalen Dehnungsspitzen im Elastomer an Blechenden auftreten. Die Beschaffung und Verarbeitung von Zwischenblechen entfällt vollständig. Die gesamte Bauhöhe zwischen den beiden Deckplatten kann für eine geringe Schubsteifigkeit genutzt werden. Bei den bekannten Lagern reduzieren die Dicken der Zwischenbleche diese nutzbare Höhe.

Durch die Verwendung von Verstärkungsfäden kann die Geometrie eines Werkzeugs zur Fertigung viel einfacher und kostengünstiger gewählt werden. Beispielsweise ist eine Zylinderform möglich und ist keine Teilung notwendig.

Die Elastomerschicht weist in ihrem Inneren eine Ausnehmung auf, welche mit einem Gas und einer Flüssigkeit befüllt ist. Durch eine Fluidfüllung, bevorzugt im Zentrum des Lagers, wird kostenintensives Elastomer eingespart. Eine Vulkanisationszeit wird erheblich verkürzt, weil die blockartige Elastomerschicht auch von innen geheizt werden kann. Durch eine zu einer Flüssigkeit zusätzliche Gasfüllung kann eine sehr progressive Kennlinie in weiten Grenzen gestaltet werden.

Insoweit ist ein Lager derart ausgestaltet, dass dieses nach kostengünstiger Fertigung eine lange Lebensdauer zeigt.

Die Verstärkungsfäden sind als Endlosfäden oder Endlosfasern ausgestaltet. Hierdurch können die Verstärkungsfäden problemlos auf die Elastomerschicht aufgewickelt werden. Ein Endlosfaden oder eine Endlosfaser kann beispielsweise mit 100 Umläufen um die äußere Umfangsfläche der Elastomerschicht gewickelt werden. Die Verstärkungsfäden liegen bevorzugt dicht aneinander, insbesondere bei geneigter Anordnung. Es ist jedoch auch denkbar, zwischen den Verstärkungsfäden einen Verstärkungsfadenabstand einzuhalten. In jedem Fall muss aber dafür gesorgt werden, dass kein Elastomer zwischen den Verstärkungsfäden herausquillt. Vor diesem Hintergrund ist denkbar, ein Vlies, vorzugsweise ein dünnes Vlies, zwischen die Verstärkungsfäden und das Elastomer zu legen.

Erfindungsgemäß werden die Verstärkungsfäden mit kleinen Verstärkungsfadenabständen dicht gewickelt oder es werden Gelege mit kleinen Verstärkungsfadenabständen benutzt.

Erfindungsgemäß hat der Verstärkungsfadenabstand einen Wert, der im Bereich kleiner als Verstärkungsfadendurchmesser bis vierfacher Wert des Verstärkungsfadendurchmessers liegt.

Bei Verstärkungsfadenabständen, die größer als der vierfache Verstärkungsfadendurchmesser sind, steigt abhängig von der vertikalen Maximalbelastung des Lagers die Gefahr eines eventuell instabilen Ausquellens des Elastomers zwischen den Verstärkungsfäden.

Folglich ist die eingangs genannte Aufgabe gelöst.

Das Lager könnte zwei Steifigkeitswerte in zwei zueinander orthogonalen Richtungen zeigen, wobei die Steifigkeitswerte sich um einen Faktor von bis zu 15000 unterscheiden. Die Untergrenze dieses Zahlenbereichs ist der Faktor 0,2, der repräsentativ für keinen Unterschied steht. Die vorzugsweise sehr unterschiedlichen Steifigkeiten in zwei orthogonalen Richtungen sind durch die Verwendung von Verstärkungsfäden anstelle von Blechen erreichbar und durch die Abkehr vom Stand der Technik, der vom traditionellen Denken in "Formfaktoren" für die Einstellung von Steifigkeitsverhältnissen bei Gummifedern und -lagern geprägt ist.

Die Drucksteifigkeit eines Lagers wird wesentlich durch den Elastizitätsmodul und die Menge der Verstärkungsfäden am Umfang der Elastomerschicht bestimmt. Durch Wahl des Materials und der Menge der Verstärkungsfäden können sehr unterschiedliche Steifigkeiten mit einer Geometrie und auch unterschiedliche Auslastungen der Festigkeit der Verstärkungsfäden eingestellt werden.

Beispielsweise könnte als Material Nylon mit E= 1.500-3.000 N/mm², Aramid mit E= 53.000 N/mm² oder Polyethylen mit E= 85.000 N/mm² gewählt werden. Des Weiteren könnte als Material ein Metall, insbesondere Stahl, verwendet werden, da Metalle hohe E-Module (Elastizitätsmodule) aufweisen.

Die Verstärkungsfäden könnten zumindest teilweise in Ebenen verlaufen, die unter einem von 90° abweichenden Winkel gegen die Längsachse des Lagers geneigt sind. Durch geneigte Verstärkungsfäden kann die Schubsteifigkeit des Lagers erhöht werden. So werden neue Einsatzbereiche erschlossen, die eine definierte Schubsteifigkeit des Lagers erfordern. Das Lager kann beispielsweise als Primärfeder in Schienenfahrzeugen eingesetzt werden.

Die Verstärkungsfäden könnten ein Gelege bilden oder in einem Gelege angeordnet sein. Durch das Ausrichten eines Geleges können gezielt Quersteifigkeiten des Lagers eingestellt werden. Mit bevorzugt nicht exakt in Umfangsrichtung ausgerichteten Gelegen kann die Quersteifigkeit eingestellt werden und kann das Lager für Primärfederungen in Schienenfahrzeugen eingesetzt werden. Ein Gelege kann beispielweise hergestellt werden, indem nebeneinander liegende Verstärkungsfäden zusammen mit Gummi gewalzt werden.

Des Weiteren ist denkbar, konfektionierte Gelege zu verwenden, wobei in einem Gummi Verstärkungsfäden eingelegt sind. Die Verstärkungsfäden könnten die äußere Umfangsfläche der Elastomerschicht zweimal oder mehrmals mit oder ohne Überlappung umlaufen. Hierdurch wird verhindert, dass Verstärkungsfäden auf Stoß anliegen und dass das Elastomer der Elastomerschicht zwischen den Verstärkungsfäden herausquillt.

Ein Gelege kann aus mehreren Lagen parallel angeordneter sogenannter Verstärkungsfadenrovings bestehen. Die einzelnen Lagen können sich in der Verstärkungsfadenorientierung unterscheiden. Die Ausrichtung der Verstärkungsfadenorientierung kann mit einem Winkel zur Produktionsrichtung angegeben werden. Dabei ist die Produktionsrichtung die 0°-Lage.

Es gibt zweilagige, sogenannte biaxiale, Gelege, in denen die Ausrichtung der Verstärkungsfäden beispielsweise 0° und 90° ist. Es gibt auch Ausrichtungen von +45°/-45°.

Des Weiteren gibt es mehrlagige, sogenannte multiaxiale, Gelege, mit einer Lagenausrichtung von 90°, -45°, 0°, +45°, wobei hier eine Vierlagigkeit gegeben ist.

Üblicherweise sind die Lagen zunächst miteinander nicht verbunden. Zur besseren Verarbeitbarkeit können diese miteinander verwirkt werden. Nicht ondulierte, geradlinig abgelegte Fasern können sehr hohe Lasten aufnehmen. In Geweben sind Fasern im Gegensatz zu Gelegen jedoch onduliert.

Ein schon mit Elastomer getränktes Gelege ist schnell verarbeitbar, hat aber den Nachteil, dass die Verstärkungsfäden oder Verstärkungsfadenrovings nur endlich lang sind. Daher sind bei einem solchen Gelege mindestens zwei Umschlingungen der Elastomerschicht notwendig.

In der Ausnehmung könnten ein Gasraum und ein Flüssigkeitsraum ausgebildet sein, welche durch eine Düse und/ oder Drossel miteinander strömungsverbindbar sind. Durch eine Trennung eines oder mehrerer Gas- und Flüssigkeitsräume durch eine Düse und/ oder Drosselstelle kann das Lager zusätzlich Dämpferaufgaben in vertikaler Richtung übernehmen.

Das hier beschriebene Lager kann grundsätzlich anstelle aller Gummi-Metall-Bauteile mit großem Steifigkeitsunterschied in zwei Richtungen verwendet werden.

Dazu zählen insbesondere Schichtfedern mit vielen Blechlagen, wie sie beispielsweise in Sekundärfedersystemen von Schienenfahrzeugen eingesetzt werden. Ebenso kann das Lager als Baulager zur Stützung von Gebäuden und Brücken verwendet werden. Das Lager kann als oder in Primärfedern oder Sekundärfedern für Schienenfahrzeuge, als Baulager oder als Brückenlager verwendet werden.

Aus analytischen, vereinfachten Betrachtungen folgt für ein als Vollfeder ausgestaltetes Lager:

$$\frac{C_D}{C_S} = \frac{d}{D} \cdot \frac{E_F}{G}$$

wobei $C_D$=Drucksteifigkeit, $C_S$=Schubsteifigkeit, d= Mittlere Dicke des Verstärkungsfadenmantels, D= Durchmesser der Feder, $E_F$= Zugmodul des Verstärkungsfadens und G=Schubmodul des Elastomers sind.

Aus analytischen, vereinfachten Betrachtungen folgt für ein Lager, welches als mit Fluid gefüllte Hohlfeder ausgestaltet ist:

$$\frac{C_D}{C_S} = \frac{d \cdot D}{(D^2 - D_i^2)} \cdot \frac{E_F}{G}$$

wobei $D_i$= Innendurchmesser (Bohrung) der Hohlfeder ist.

Das realistische Steifigkeitsverhältnis $\frac{C_D}{C_S}$ reicht von

$$\frac{C_D}{C_S} = 0{,}2$$

für eine Vollfeder ohne Bohrung bei einer dünnen Einzelverstärkungsfadenschicht mit d/D = 0,00025, $E_F$= 1.000 N/mm$^2$ und G= 1,5 N/mm$^2$,
bis zu

$$\frac{C_D}{C_S} = 15.000$$

für eine mit Fluid gefüllte Feder bei einer dicken Verstärkungsfadenschicht mit d/D= 0,033, $D_i$/D= 0,75, $E_F$=210.000 N/mm$^2$ und G=1 N/mm$^2$.

Die geringsten Schubsteifigkeiten werden mit einem Verstärkungsfadenwinkel von 0° erreicht, was einer rein tangentialen Wicklung entspricht.

Über eine Neigung des Verstärkungsfadens bis zu 45° kann die Quersteifigkeit des Lagers gezielt eingestellt werden. Bevorzugt werden im Bereich 0° bis 15° andere Quersteifigkeiten erreicht mit nur geringen Änderungen der Drucksteifigkeit.

Bei Lagern mit kreuzweise geneigten Verstärkungsfäden kann der Verstärkungsfadenabstand größer gewählt werden, vorzugsweise bis zum sechsfachen des Verstärkungsfadendurchmessers bei 15° Neigung und bis zum zehnfachen des Verstärkungsfadendurchmessers bei 45° Neigung.

Gegen ein Ausquellen des Elastomers bei designbedingten größeren Verstärkungsfadenabständen, nämlich vorwiegend bei besonders weichen Federn, kann unter die Verstärkungsfadenlage ein Vlies aus vorzugsweise dem gleichen Material oder einem Material geringeren E-Moduls gelegt werden, das ein Ausquellen auch bei größeren Verstärkungsfadenabständen verhindert. Typischerweise kommen ungebundene Vliese mit 0,1 bis 0,5 mm Dicke zum Einsatz.

Als Verstärkungsfäden werden vorzugsweise Kunststofffasern verwendet. Für Brandschutzanwendungen werden vorzugsweise Aramidfasern oder Metallfasern verwendet.

Zur Herstellung sehr hoher Steifigkeitsverhältnisse können auch Kohlefasern und Metallfasern, vorzugsweise Stahlfasern, verwendet werden.

Um ein geringes Setzen zu bewirken, werden vorzugsweise Stahlfasern eingesetzt.

Das hier beschriebene Lager kann in Bau- und Landmaschinen verwendet werden. Es kann als Motorlager verwendet werden, da es ein geringes Gewicht zeigt und korrosionsfest ausgeführt sein kann.

Das Lager kann als Baulager verwendet werden, da es eine einfache Konstruktion aufweist und kostengünstig zu fertigen ist. Vorteilhaft können Stahlfasern verwendet werden, um ein geringes Setzen zu bewirken.

Es kann zur Lagerung von Vibrationswalzen verwendet werden, da hohe Steifigkeitsverhältnisse einstellbar sind und eine kostengünstige Fertigung möglich ist.

In Windkraftanwendungen ist eine Verwendung des Lagers als Motor-Getriebelagerung denkbar, da eine Drehmomentstütze, ein geringes Gewicht bei hohen Steifigkeiten und eine korrosionsfeste Ausführung, insbesondere mit Aramidfasern oder Stahlfasern als brandschützende Umhüllung, möglich sind.

Das Lager kann als Motorlager für Großmotoren in marinen Anwendungen oder in Blockheizkraftwerken verwendet werden. Vorteilhaft sind Drehmomentstützen, geringes Gewicht sowie eine korrosionsfeste Ausführung, insbesondere mit Aramidfasern oder Stahlfasern als brandschützende Umhüllung, realisierbar.

In der Industrie kann das Lager zur Lagerung von Kompressoren, zur Rohrlagerung mit Spielausgleich und zur Kompensation von Wärmedehnungen verwendet werden. Das Lager zeigt hohe Steifigkeitsverhältnisse und ist kostengünstig.

Kurzbeschreibung der Zeichnung

In der Zeichnung zeigen

Fig. 1 ein Lager, welches mit Gas und Flüssigkeit befüllt ist,

Fig. 2 ein Lager, das mit Gas und Flüssigkeit befüllt ist, wobei zwischen dem Gasraum und dem Flüssigkeitsraum eine Düse angeordnet ist,

Fig. 3 eine Anordnung, bei der ein Lager mit einem Flüssigkeitsraum mit einem externen Hydrospeicher verbunden ist, und

Fig. 4 ein weiteres Lager, welches mit Gas und Flüssigkeit unter Druck befüllt ist.

Ausführung der Erfindung

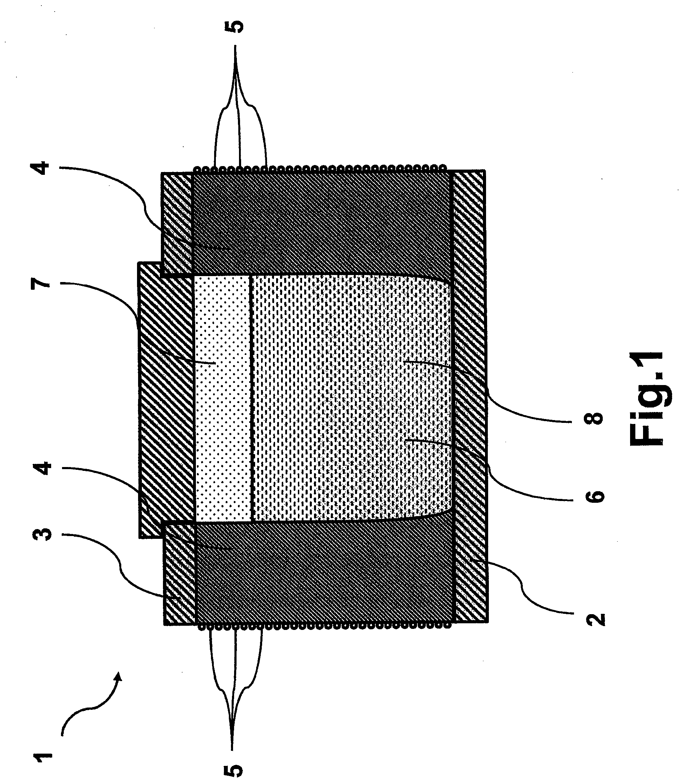

Fig. 1 zeigt ein Lager 1, umfassend eine erste Deckplatte 2 und eine zweite Deckplatte 3, wobei zwischen der ersten Deckplatte 2 und der zweiten Deckplatte 3 eine Elastomerschicht 4 angeordnet ist. Der Elastomerschicht 4 sind Verstärkungsfäden 5 zugeordnet. Das Lager 1 zeigt zwei Steifigkeitswerte in zwei zueinander orthogonalen Richtungen, wobei die Steifigkeitswerte sich um einen Faktor von bis zu 15000 unterscheiden.

Die Verstärkungsfäden 5 umfangen und umgeben die Elastomerschicht 4. Die Verstärkungsfäden 5 verlaufen an der äußeren Umfangsfläche der Elastomerschicht 4, wobei diese sandwichartig zwischen den Deckplatten 2, 3 aufgenommen ist. Insoweit sind die Verstärkungsfäden 5 kein Teil der Elastomerschicht 4, sondern sind aus einem anderen Material als die Elastomerschicht 4 gefertigt.

Die Elastomerschicht 4 weist in ihrem Inneren eine Ausnehmung 6 auf, welche mit einem Gas 7 und einer Flüssigkeit 8 befüllt ist.

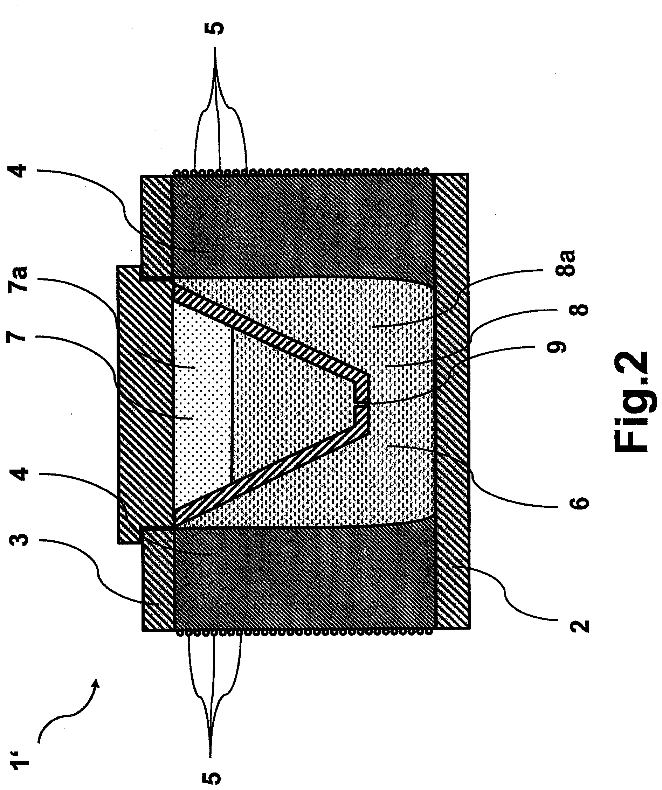

Fig. 2 zeigt ein Lager 1', bei welchem in der Ausnehmung 6 ein Gasraum 7a und ein Flüssigkeitsraum 8a ausgebildet sind, welche durch eine Düse 9 miteinander strömungsverbindbar sind.

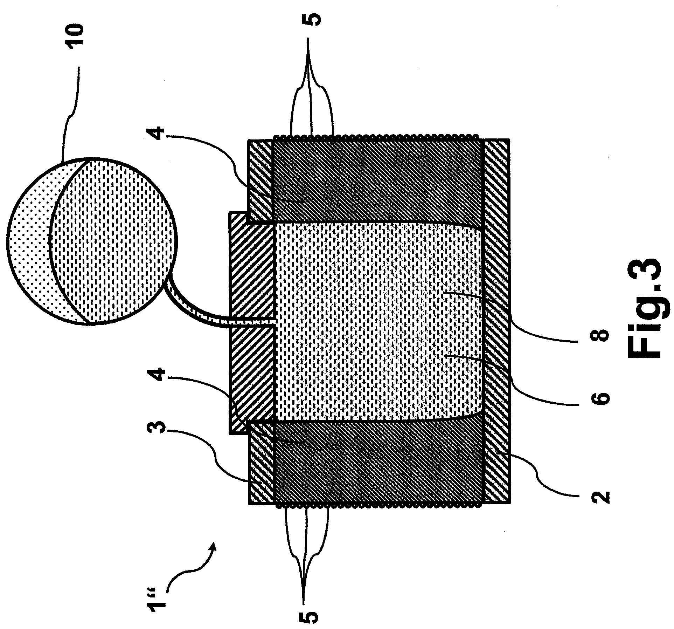

Fig. 3 zeigt eine Anordnung mit einem externen Hydrospeicher 10 und einem Lager 1", dessen Ausnehmung 6 mit einer Flüssigkeit 8 befüllt ist, wobei die Ausnehmung 6 mit dem externen Hydrospeicher 10 strömungsverbunden ist.

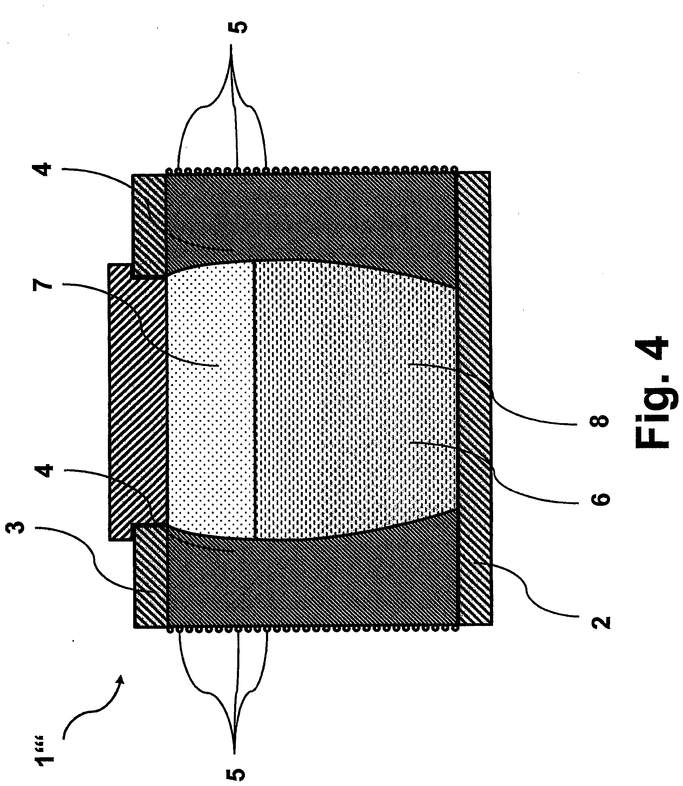

Fig. 4 stellt ein Lager 1''' unter Innendruck dar. Der Innendruck wurde bei der Fertigung eingestellt. Dies gibt eine weitere Möglichkeit, die Kennlinien des Lagers 1''' zu verändern.

Das in den Fig. 1 bis 4 gezeigte Lager 1, 1', 1", 1''' kann eine Schichtfeder ersetzen, bei welcher üblicherweise zwischen zwei Deckplatten eine Vielzahl von Blechen und Elastomerschichten angeordnet sind.

**Patentansprüche**

1. Lager (1, 1', 1", 1'''umfassend eine erste Deckplatte (2) und eine zweite Deckplatte (3), wobei zwischen der ersten Deckplatte (2) und der zweiten Deckplatte (3) eine Elastomerschicht (4) angeordnet ist und wobei der Elastomerschicht (4) Verstärkungsfäden (5) mit einem Verstärkungsfadendurchmesser zugeordnet sind, die Elastomerschicht (4) in ihrem Inneren eine Ausnehmung (6) aufweist, welche mit einem Gas (7) und einer Flüssigkeit (8) befüllt ist **dadurch gekennzeichnet, dass** die Verstärkungsfäden (5) als Endlosfäden oder Endlosfasern ausgestaltet sind und die Elastomerschicht (4) umfangen oder umgeben, und dass

ein Verstärkungsfadenabstand einen Wert hat, der im Bereich kleiner als der Verstärkungsfadendurchmesser bis zum vierfachen Verstärkungsfadendurchmesser liegt.

2. Lager nach Anspruch 1, **gekennzeichnet durch** zwei Steifigkeitswerte in zwei zueinander orthogonalen Richtungen, wobei die Steifigkeitswerte sich um einen Faktor von bis zu 15000 unterscheiden.

3. Lager nach einem der voranstehenden Ansprüche, **dadurch gekennzeichnet, dass** die Verstärkungsfäden (5) zumindest teilweise in Ebenen verlaufen, die unter einem von 90° abweichenden Winkel gegen die Längsachse des Lagers (1, 1', 1") geneigt sind.

4. Lager nach einem der voranstehenden Ansprüche, **dadurch gekennzeichnet, dass** die Verstärkungsfäden (5) ein Gelege bilden oder in einem Gelege angeordnet sind.

5. Lager nach Anspruch 1, **dadurch gekennzeichnet, dass** in der Ausnehmung (6) ein Gasraum (7a) und ein Flüssigkeitsraum (8a) ausgebildet sind, welche durch eine Düse (10) und/ oder Drossel miteinander strömungsverbindbar sind.

6. Verwendung eines Lagers (1, 1', 1", 1''') nach einem der voranstehenden Ansprüche als Feder.

**Claims**

1. Bearing (1, 1', 1", 1'''), comprising a first cover plate (2) and a second cover plate (3), wherein an elastomer layer (4) is arranged between the first cover plate (2) and the second cover plate (3) and wherein reinforcement threads (5) with a reinforcement thread diameter are assigned to the elastomer layer (4), the elastomer layer (4) comprises in its interior a recess (6) which is filled with a gas (7) and a liquid (8), **characterised in that** the reinforcement threads (5) are designed as continuous threads or continuous fibres and encompass or surround the elastomer layer (4), and that a reinforcement thread interval has a value which is in the range from less than the reinforcement thread diameter to four times the reinforcement thread diameter.

2. Bearing according to claim 1, **characterised by** two stiffness values in two directions which are orthogonal to one another, wherein the stiffness values differ from one another by a factor of up to 15,000.

3. Bearing according to one of the previous claims, **characterised in that** the reinforcement threads (5) run at least partly in planes which are inclined towards the longitudinal axis of the bearing (1, 1', 1") at an angle which is not 90°.

4. Bearing according to one of the previous claims, **characterised in that** the reinforcement threads (5) form a non-crimp fabric or are arranged in a non-crimp fabric.

5. Bearing according to claim 1, **characterised in that** a gas space (7a) and a liquid space (8a) are formed in the recess (6), between which a flow connection can be created by means of a nozzle (10) and/or throttle.

6. Use of a bearing (1, 1', 1", 1''') according to one of the previous claims as a spring.

**Revendications**

1. Support (1, 1', 1", 1''') comprenant une première plaque de recouvrement (2) et une deuxième plaque de recouvrement (3), une couche en élastomère (4) étant disposée entre la première plaque de recouvrement (2) de la deuxième plaque de recouvrement (3), la couche en élastomère (4) intégrant des fils de renfort (5) d'un certain diamètre, la couche en élastomère (4) présentant à l'intérieur un évidement (6) qui est rempli d'un gaz (7) et d'un liquide (8), **caractérisé en ce que** les fils de renfort (5) prennent la forme de fils continus ou de fibres continues et entourent ou encerclent la couche en élastomère (4), et **en ce que** l'espacement des fils de renfort a une valeur située dans une plage inférieure au diamètre des fils de renfort et pouvant aller jusqu'à quatre fois le diamètre des fils de renfort.

2. Support selon la revendication 1, **caractérisé par** deux valeurs de rigidité dans deux directions orthogonales l'une par rapport à l'autre, les valeurs de rigidité pouvant varier selon un facteur allant jusqu'à 15 000.

3. Support selon l'une des revendications précédentes, **caractérisé en ce que** les fils de renfort (5) s'étendent au moins partiellement dans des plans qui sont inclinés selon un angle autre que 90° par rapport à l'axe longitudinal du support (1, 1', 1").

4. Support selon l'une des revendications précédentes, **caractérisé en ce que** les fils de renfort (5) constituent une nappe ou sont organisées au sein d'une nappe.

5. Support selon la revendication 1, **caractérisé en ce qu'**une chambre à gaz (7a) et une chambre à liquide (8a), qui peuvent être reliées l'une à l'autre par une buse (10) et/ou un étranglement, sont formées dans l'évidement (6).

6. Utilisation d'un support (1,1', 1", 1''') selon l'une des revendications précédentes comme ressort.

Fig.1

Fig.2

**Fig.3**

**Fig. 4**

EP 2 929 209 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 20204 C
- FR 2073162 A1
- US 20020105123 A1
- EP 2360388 A
- US 4006892 A
- EP 1050695 A2

**In der Beschreibung aufgeführte Nicht-Patentliteratur**

- **ULRICH GERHAHER.** *FASERVERSTÄRKTE ELASTOMERLAGER - Konzeption und Bemessung,* August 2010